(19) Europäisches Patentamt

European Patent Office

Office européen des brevets

(11) **EP 1 281 671 A1**

(12) **EUROPEAN PATENT APPLICATION**
published in accordance with Art. 158(3) EPC

(43) Date of publication:
**05.02.2003 Bulletin 2003/06**

(51) Int Cl.⁷: **C01B 33/12**, C01B 31/02,
C08K 9/02, C08L 101/00,
H01B 1/24, C09K 3/16

(21) Application number: **01904390.0**

(22) Date of filing: **13.02.2001**

(86) International application number:
**PCT/JP01/00972**

(87) International publication number:
**WO 01/060745 (23.08.2001 Gazette 2001/34)**

(84) Designated Contracting States:
**AT BE CH CY DE DK ES FI FR GB GR IE IT LI LU
MC NL PT SE TR**

(30) Priority: **17.02.2000 JP 2000039915**

(71) Applicant: **OTSUKA CHEMICAL COMPANY,
LIMITED**
**Osaka-shi, Osaka 540-0021 (JP)**

(72) Inventors:
• **HAREYAMA, Yukiya,**
**c/o Otsuka Chemical Co Ltd**
**Tokushima-shi, Tokushima 771-0193 (JP)**
• **MORI, Hiroyoshi, c/o Otsuka Chemical Co Ltd**
**Tokushima-shi, Tokushima 771-0193 (JP)**

(74) Representative: **Merkle, Gebhard**
**TER MEER STEINMEISTER & PARTNER GbR,**
**Patentanwälte,**
**Mauerkircherstrasse 45**
**81679 München (DE)**

(54) **CARBON-COATED POROUS SILICA POWDER, PROCESS FOR PRODUCING THE SAME, AND CONDUCTIVE RESIN COMPOSITION CONTAINING THE POWDER**

(57)    A process for producing a carbon-coated porous silica powder which comprises the step of heating organic-compound particles coated with a silica component in a non-oxidizing atmosphere to thereby carbonize the organic-compound particles and shape the silica component into the form of hollow spheres or the like and, simultaneously therewith, deposit the carbon generated by the carbonization to the surface of the silica component; a porous silica powder the surface of which has been coated with carbon and which is produced by the process; and a conductive resin composition which comprises a resin and the silica incorporated therein.

FIG. 1

EP 1 281 671 A1

**Description**

**TECHNICAL FIELD**

The present invention relates to a carbon-coated porous silica powder which is suitable for incorporation in various injection molding resin compositions such as outer resin plies of automobiles; conductive coatings, inks and pastes; tires and belts; OA conductive rolls and toners and for use as an additive for coatings, a catalyst carrier and an adsorbent. The present invention also relates to a process for production thereof and a conductive resin composition containing the powder.

**BACKGROUND ART**

Silica has conventionally achieved wide use as an industrial material because of its advantages such as low specific gravity, low price and high corrosion resistance. Such silica, if rendered porous and used as a compounding ingredient, provides an expected effect at lower loadings and thus become advantageous in terms of cost and weight reduction. From such a point of view, the use of porous silica has been continuously studied.

Porous silica has been heretofore produced by various techniques. One known technique involves treating calcium silicate with carbonate and then with acid (Japanese Patent Publication No. 55-14809). Another known technique involves coating a siliceous component on a surface of an acid-soluble core material, such as barium carbonate, and then subjecting the coated core material to an acid treatment to thereby remove the core material so that the siliceous coating is left alone to provide the purposed porous silica. Other known technique involves coating a siliceous component on a core material, such as graphite, and then heating the coated core material in an oxidizing atmosphere to thereby cause decomposition and sublimation of the core material so that the purposed porous silica is provided (Japanese Patent Laid-Open No. Hei 2-218768).

In view of utility of silica material, its application has also been extensively investigated. For example, the surface coverage of silica particles by carbon has been proposed for the purposes of modifying surface properties thereof or imparting electrical conductivity thereto.

A generally-known process for coating inorganic powder with carbon comprises subjecting the untreated powder to a heat treatment in a non-oxidizing atmosphere under the presence of a carbon source such as hydrocarbon. However, when this treatment method is applied to porous silica which has minute pores, such minute pores are caused to disappear by the occurrence of melt fusion between crystals. As a result, silica loses its porous nature. Also, in such a heating step, powder particles are melt fused to each other to form large agglomerates. Accordingly, a method is unknown up to date by which porous silica is post-treated to coat it with carbon.

Also, the carbon coated by such a post-treatment fills small pores of porous silica to make it nonporous. Similar problems arise when porous silica and a fine carbon powder (e.g., carbon black) are mixed together by solids mixing. It has been accordingly difficult to utilize carbon in modifying surface properties of porous silica or impart electrical conductivity thereto while maintaining a porous nature thereof.

**DISCLOSURE OF THE INVENTION**

It is an object of the present invention to provide a carbon-coated porous silica powder comprising a porous silica powder which carries a carbon coating on its surface while maintaining its porous nature.

It is another object of the present invention to provide an inexpensive and light-weight conductive material.

In the attempt to solve the above-described problems, the inventors of this application have conducted intensive and continuous study and finally found an improved method to complete the present invention.

That is, the carbon-coated porous silica powder of the present invention is characterized as comprising porous silica wall structures having a hollow spherical or hollow sphere-derived shape and coated at their surfaces with carbon.

The carbon-coated porous silica powder of the present invention comprises the porous silica wall structures coated at their surfaces with carbon. It accordingly has good electrical conductivity and when incorporated in a resin, rubber or the like imparts satisfactory electrical conductivity thereto. The hollow spherical or hollow sphere-derived shape of the carbon-coated porous silica powder of the present invention is not a rigid one. When this silica powder is mixed in a resin, rubber or the like by a kneader, it is occasionally crushed to undergo a shape change. However, because the wall structures retain a continuous train of porous silica if crushed to change their shapes, they can form good electrically conducting paths in a resin or rubber matrix and accordingly impart satisfactory electrical conductivity.

Hence, the carbon-coated porous silica powder of the present invention may be crushed previously to the degree that the wall structures can retain a continuous train of porous silica.

The carbon-coated porous silica powder of the present invention is obtainable by coating 3 nm - 3 mm diameter particles of an organic compound with a silica component and subsequently heating the coated particles in a non-oxidizing atmosphere so that the organic compound is carbonized.

Accordingly, the carbon-coated porous silica powder in accordance with another aspect of the present invention is the carbon-coated porous silica powder obtainable by coating 3 nm - 3 mm diameter particles of an organic compound with a silica component and then heating the coated particles in a non-oxidizing atmosphere so that the organic compound is carbonized.

Preferably, the coated particles are placed in a non-oxidizing atmosphere and heated at a temperature within the range of 500 °C - 1,400 °C.

The electrically conductive resin composition of the present invention is characterized as containing a resin and the carbon-coated porous silica powder of the present invention.

The carbon-coated porous silica powder of the present invention comprises the wall structures made up from a silica component and coated at their surfaces (both outer and inner surfaces) with carbon. The silica component, as used herein, refers to a substance comprised chiefly of silicon oxide. Examples of such substances include silicon oxides such as silica, cristobalite, quartz, rock crystal and the like, and metal silicates. These substances may be in the form of hydrates or contain other components.

The carbon-coated porous silica powder of the present invention has a hollow spherical or hollow sphere-derived shape. The hollow sphere-derived shape, as used herein, is intended to encompass a shape of a partially broken hollow sphere and shapes of curved fragments of a crushed hollow sphere, and may specifically refer to a shape of a bowl, a cup or a curved plate, for example.

The carbon-coated porous silica powder of the present invention has a markedly larger specific surface area compared to normal silica powders and its BET specific surface area is generally in the approximate range of 30 - 1,500 $m^2$/g, preferably in the approximate range of 100 - 500 $m^2$/g.

The weight ratio of carbon to silica component ranges approximately from 1:99 to 99:1, preferably from 1:99 to 50:50.

The carbon-coated porous silica powder of the present invention can be produced, for example, by coating 3 nm - 3 mm diameter particles of an organic compound with a silica component and then heating the coated particles in a non-oxidizing atmosphere.

The type of the organic compound which takes the form of particles is not particularly specified, so long as it decomposes on heating to produce carbon. Various organic compounds can thus be used. The particles of an organic compound may preferably be provided in the solid form. Alternatively, they may be provided in the liquid form, e.g., in the form of an oil-in-water emulsion.

Examples of organic compounds include hydrocarbons, carbohydrates and polymers such as vinyl-, urethane- and ester-based polymers. Preferred among them are polymeric compounds.

The hydrocarbons, both aliphatic and aromatic, can be used. Examples of aliphatic hydrocarbons include saturated hydrocarbons, ethylenic hydrocarbons and acetylenic hydrocarbons. Examples of aromatic hydrocarbons include polynuclear aromatic hydrocarbons such as naphthalene and anthracene, and halides of the aforementioned hydrocarbons. These hydrocarbons may be used alone or in combination.

Various mono- and poly-saccharides can be used for carbohydrates. Examples of carbohydrates include sucrose, cellulose, amylose, amylopectin, hemicellulose and their derivatives. These may be used alone or in combination. Various natural carbohydrates containing one or more components other than any of the above-listed carbohydrates, refined and processed products thereof may preferably be used in industry. Specific examples thereof include starches such as flour, potato starch and cornstarch, wood cellulose and powdered cellulose obtainable by subjecting wood cellulose to an acid hydrolysis treatment and then to a pulverization treatment.

Examples of polymers include polyolefins such as polyethylene and polypropylene; polystyrenes such as polystyrene, polymethylstyrene and polychlorostyrene; polyamides; polyesters such as polyacetal, polyurethane and polyethylene terephthalate; and the like.

Among these, aromatic compounds are preferred and polystyrenes are particularly preferred.

The particles may be in the dry form such as pellets, granules, beads and particulates. They may be provided in the form of a dispersion in water, such as an aqueous emulsion prepared via emulsion polymerization, or in the form of a dispersion in an organic solvent such as a poor solvent.

Among them, the use of aqueous resin emulsions is preferred. Specific examples of aqueous resin emulsions include polystyrene emulsion, polyvinyl acetate emulsion, ethylene-vinyl acetate copolymer emulsion, vinyl acetate-versatate copolymer emulsion, ethylene-vinyl acetate-vinyl chloride copolymer emulsion, ethylene-vinyl acetate-acrylic ester copolymer emulsion, acrylic ester polymer emulsion, acrylic ester-styrene copolymer emulsion, polyvinyl chloride emulsion, silicone resin emulsion, epoxy resin emulsion, aqueous starch and the like.

The particles preferably have diameters of 3 nm - 3 mm. The use of fine particles which have diameters ranging from 3 nm to 1 μm is particularly preferred for their ability to facilitate production of the carbon-coated porous silica powder which retains a hollow spherical shape.

Various methods, without specific limitation, can be utilized to coat such organic compound particles with the silica component. The term "coat" is intended herein to encompass a configuration whereby an entire surface of the organic compound particle is evenly coated with the silica component, configurations whereby a surface of the organic compound particle is partially coated with the silica component, configurations whereby a plurality of the organic compound particles are joined to each other by the silica component, and configurations whereby a plurality of the organic compound particles are together encircled by a coating of the silica component.

Such coating can be effected, for example, by a method which comprises adding a liquid-form silica component to organic compound particles dispersed in a dispersion medium and allowing the silica component to deposit on surfaces of the organic compound particles.

Examples of silica components include organosilica compounds, e.g., alkoxysilanes such as methyltrimethoxysilane, aminosilanes such as $\gamma$-aminopropyltriethoxysilane, N-($\beta$-aminoethyl)-$\gamma$-aminopropyl-trimethoxysilane and N-phenylaminomethyltrimethoxysilane, vinylsilanes such as vinylmethyldiethoxysilane and epoxysilanes; their solutions in water or organic solvents; aqueous solutions of silicates such as silica sol, organosilica sol, sodium silicate and potassium silicate; and the like. The type of the silica component is not particularly specified, so long as it can assume a liquid form. A wide variety of silica components, either organic or inorganic, can be used.

Examples of methods resulting in the deposition of the silica component on surfaces of organic compound particles include a method wherein a pH within a system is controlled, a method wherein a silica sol or the like, different in surface charge from the organic compound particles, is added to produce agglomerates which subsequently precipitate, a recrystallization method wherein solvents having different solubilities may be added, a method wherein the solvent or dispersion medium is removed as by a spray drying process. For example, the aforementioned method wherein a pH within a system is controlled can be illustrated by a method which comprises adding an aqueous silicate solution or the like which deposits in an acidic region, as the silica component, to a dispersion of organic compound particles, and then adding thereto an acid, e.g., hydrochloric acid, sulfuric acid, nitric acid or other mineral acid, or acetic acid, citric acid or other organic acid, so that the silica component is deposited on surfaces of the organic compound particles.

Such coating can also be achieved by a method wherein the liquid-form silica component is spray or dip coated on surfaces of the organic compound particles and the coated particles are subsequently dried by heat or under vaccuum. A preferred method may comprise adding by a spray the liquid-form silica component to the organic compound particles while stirred as by a super mixer, Henshel mixer, Nauta mixer, ribbon blender or die blender and heating the mixture at a temperature of below a melting point of the organic compound.

In these methods, the amount of the silica component coated on the organic compound particles is not particularly specified and can thus be optionally chosen. Generally, the ratio by weight of carbon present in the organic compound particles to the silica component is preferably set to range from 1:99 to 99:1, more preferably from 1:99 to 50:50.

The thus-obtained powder consisting of the organic compound particles coated with the silica component can be converted to the carbon-coated porous silica powder by subjecting it to a heat treatment in a non-oxidizing atmosphere.

The non-oxidizing atmosphere, as used herein, refers to a single or mixed atmosphere chosen from vacuum, hydrogen, carbon monoxide, ammonia and other reducing gas atmospheres and nitrogen, helium, argon and other inert gas atmospheres.

The heating temperature must be sufficient for the organic compound particles to decompose to carbonization and is suitably chosen depending upon the type of the organic compound used, the heating atmosphere, the requried degree of carbonization and the like. However, it is generally preferred that the heating temperature is set to range from 500 °C to 1,400 °C. If the heating temperature is below 500 °C, decomposition of the organic compound often becomes insufficient. If it exceeds 1,400 °C, undesired melt fusion of pores or the like may occur.

As the individual organic compound particle decompose thermally, it generates gaseous carbon which subsequently deposits on surfaces of the porous silica wall structure to provide carbon coatings thereon. The gaseous carbon passes through pores of the porous silica wall structure to an exterior thereof. This is believed to result in provision of carbon coatings on both inner and outer surfaces of the wall structure. Also, such a gas release from an interior of the wall structure is believed to allow the wall structure to retain its hollow spherical shape or hollow sphere-derived shape without a tendency of pores in the porous silica to disappear.

The carbon-coated porous silica powder of the present invention is useful as a conductive material, particularly as a conductive filler for incorporation in a resin, and establish excellent electrical conductivity at low loading (weight).

Also, a resin composition containing a resin and the carbon-coated porous silica powder of the present invention is useful where electrical conductivity is needed, e.g., as an object to be electrostatically coated, an antistatic material and the like.

The type of the resin incorporated is not particularly specified and can be either thermoplastic or thermosetting. Typical examples of resins include polyolefins such as polyethylene and polypropylene, polystyrene, acrylonitrile-butadiene-styrene, acrylic, polyamide, polyacetal, vinyl chloride, polycarbonate, thermotropic liquid crystal polyester, polyether ether ketone, polyether, polyphenylene sulfide, polyimide, natural rubber, nitrile rubber, nitrile-butadiene rubber, butadiene rubber, styrene-butadiene rubber, chloroprene rubber, phenolic, epoxy, urea, unsaturated polyester, polyimide, polyurethane and the like.

Any method can be utilized to blend the carbon-coated porous silica powder and the resin. Where the resin is thermoplastic, the silica powder may be mixed or dispersed in the resin as by melt kneading. The melt kneading may be carried out after the resin, either in the powdered or pelletized form, is dry mixed with the carbon-coated porous silica powder of the present invention. Alternatively, a pelletized resin which contains a high concentration of the carbon-coated porous silica powder of the present invention may be prepared and used in accordance with a so-called masterbatch process.

Where the resin is thermosetting, the silica powder may be mixed or dispersed in the resin as by a wet process. The resin in the powdered form may be dry mixed with the carbon-coated porous silica powder.

The resulting resin composition can be processed by various processing means, such as injection molding, extrusion and transfer molding, into products contemplated for uses as automobile parts, electrical appliance parts, IC trays and the like.

The carbon-coated porous silica powder of the present invention, when blended with a resin dissolved in a solvent or with a reaction curable liquid resin, provides a coating composition. Such a coating composition can be suitably used as a conductive, weather-resistant or black coating. Examples of resins useful for such coatings include fluoro, vinyl chloride, polyvinylidene chloride, polyvinyl alcohol, acrylic, alkyd, vinyl acetate, silicone, phenolic, epoxy, polyester, urea, melamine, polyurethane, styrene-butadiene rubber, chloroprene rubber, butyl rubber, polysulfide rubber, silicone rubber and the like.

The carbon-coated porous silica powder of the present invention is also useful as a modifier effective to improve strength and suppress heat generation of rubbers.

Also, the porous nature and chemical resistance of the carbon-coated porous silica powder of the present invention makes it very useful as a carrier for various catalysts, an adsorbent and the like.

As stated earlier, when the carbon-coated porous silica powder of this invention is mixed with a resin, rubber or the like, occasional breakage of its hollow spherical shape is caused to occur by the action of a shear stress produced during kneading. Even in such an occasion, minute porous silica particles are maintained in the form a continuous train, so that they successfully form a good electrically conductive path in the resin or rubber and impart thereto satisfactory electrical conductivity. Hence, the carbon-coated porous silica powder can impart good electrical conductivity even if it is crushed previously to the extent that the continuous train of porous silica particles is maintained.

## BRIEF DESCRIPTION OF THE DRAWINGS

Figure 1 is a photomicrograph taken using a transmission electron microscope, showing the silica component coated organic compound particles obtained in Example 1;

Figure 2 is a photomicrograph taken using a transmission electron microscope, showing the carbon-coated porous silica powder obtained in Example 2; and

Figure 3 is a photomicrograph taken using a transmission electron microscope, showing the hollow spherical silica powder obtained in Comparative Example 1.

## BEST MODE FOR CARRYING OUT THE INVENTION

The present invention is below described in detail by referring to Examples and Comparative Examples. The following Examples illustrate the present invention but are not intended to be limiting thereof.

The following measurement methods were utilized in Examples.

(1) Electrical conductivity ($\Omega \cdot cm$) of sample powder

0.5 g of a powder sample was packed in a polyacetal tubular container and then pressed at a pressure of 100 $Kg/cm^2$ between upper and lower copper rods serving as electrodes and each having a diameter equal in dimension to a hollow center of the tubular container. The electrical resistance R ($\Omega$) of the sample was calculated from current and voltage values as measured between the upper and lower electrodes. The electrical conductivity $\rho$ ($\Omega \cdot cm$) of the sample powder was calculated from a sample thickness and an electrode contact area during measurement, according to the following equation:

Electrical conductivity $\rho$ ($\Omega \cdot$cm) = electrical

resistance R ($\Omega$) x electrode contact area (cm$^2$) / sample

thickness (cm)

(2) Surface resistance of sample resin composition

A surface resistance of a resin composition sample was measured using a surface resistance meter "HIRESTA GP" (name used in trade and manufactured by Mitsubishi Chemical Corp., measuring range ($10^4$ - $10^{12}$ $\Omega$)).

(3) Specific surface area (cm$^2$) of sample powder

A specific surface area of a powder sample was measured using a specific surface area meter "GEMINI-2360" (name used in trade and manufactured by Shimadzu Corp.) according to a BET multipoint method.

(4) Particle size and morphology of sample powder

Various dimensions of a powder sample were actually measured by scale reading from photomicrographs taken using an electron microscope (SEM, TEM). Their average values were shown.

(5) Carbon content (% by weight) of sample powder

A carbon content of a powder sample was determined by the measurement of a weight reduction thereof according to thermogravimetric analysis.

(Reference Example 1)

10 g of polyoxyethylene sorbitan monooleate (reagent; product of Wako Pure Chem. Industries, Ltd., equivalent of ICI-TWEEN 80) was dissolved in 1,800 g deionized water. 200 g of a styrene monomer (reagent; product of Wako Pure Chem. Industries, Ltd.) was gradually added for emulsification. 1 g of potassium peroxodisulfate dissolved in 10 g deionized water was further added. Emulsion polymerization was then effected in a nitrogen atmosphere at 70 °C for 24 hours to obtain a polystyrene emulsion.

(EXAMPLE 1)

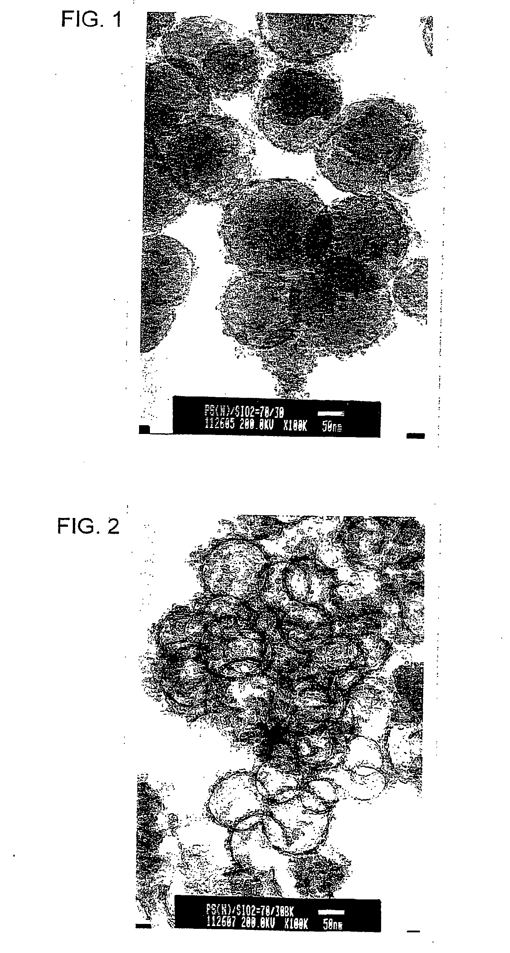

42 g (SiO$_2$ content of about 15 g) of a sodium silicate solution (first-grade reagent, product of Wako Pure Chem. Industries, Ltd.) and deionized water were added to 350 g (polystyrene content of about 35 g) of the polystyrene emulsion obtained in Reference Example 1. The mixture was stirred and then adjusted to a pH 6 by gradual addition of a 1 N aqueous solution of hydrochloric acid. After additional two hours of stirring at room temperature, the resulting mixture was filtered, washed with water and dried at 50 °C for 24 hours to obtain a white powder.
From TEM observation, the white powder was found to consist of 50 - 500 nm diameter spherical polystyrene particles evenly coated with the silica component. The results of thermogravimetric analysis indicated the white powder as containing about 70 % by weight of polystyrene and about 30 % by weight of the silica component in terms of SiO$_2$. Figure 1 is a TEM photomicrograph (at a magnification of 100,000X) showing the white powder obtained. In Figure 1, the white-on-black line given at the bottom indicates a scale of 50 nm.

(EXAMPLE 2)

The white powder obtained in Example 1 was placed in a box-type oven under controlled nitrogen atmosphere and then heat-treated at 950 °C for 1 hour to obtain a black powder. From TEM observation, this black powder was found to consist of hollow particles having sizes slightly smaller than those (50 - 500 nm) of the particles prior to being heat-treated. Figure 2 is a TEM photomicrograph (at a magnification of 100,000X) showing the black powder obtained. In Figure 2, the white-on-black line given at the bottom indicates a scale of 50 nm. As can be clearly seen from Figure 2, inner portions of the spherical particles appear lighter compared to those shown in Figure 1 and are thus proved to be hollow. On the other hand, outer surfaces of the spherical particles appear dark relative to the rest. This demonstrates that the spherical particles are surface-coated with carbon.

(EXAMPLE 3)

70 g of about 1.0 mm diameter polystyrene particles (product name: DIC ELASTYLENE, product of Dainippon Ink & Chemicals, Inc.) was added to a solution containing 100 g of a sodium silicate solution (reagent; product of Wako Pure Chem. Industries, Ltd.) and 100 g of deionized water and thoroughly dispersed therein. Subsequently, the mixture was neutralized with a 1 N solution of hydrochloric acid so that it was converted into a gel.

This gel was filtered, washed with water, dried and coarsely divided to obtain 100 g of a white powder consisting of polystyrene particles coated with hydrated silica.

(EXAMPLE 4)

The powder of Example 3 was placed under nitrogen atmosphere in a tube furnace and burned at 900 °C for 1 hour to obtain 40 g of a black powder.

(COMPARATIVE EXAMPLE 1)

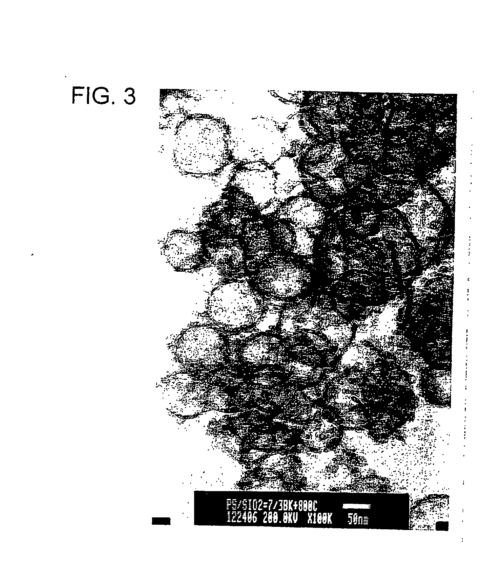

The white powder obtained in Example 1 was subjected to a heat treatment at 950 °C for 1 hour in an abundant oxygen atmosphere, as contrary to Example 2 in which the same procedure was performed in a nitrogen reducing atmosphere, to obtain a white powder. From TEM observation, this white powder was found to consist of hollow particles having sizes slightly smaller than diameters of the particles prior to being heat-treated. Figure 3 is a TEM photomicrograph (at 100,000X magnification) showing the white powder obtained. As apparent from a comparison thereof to Figure 2, particle surfaces do not appear darkened and are thus found to be uncoated with carbon.

(COMPARATIVE EXAMPLE 2)

The procedure of Comparative Example 1 was repeated to obtain hollow white particles. 30 g of these hollow white particles and 70 g of 1 mm diameter polystyrene particles were dry mixed. The mixture was placed under nitrogen atmosphere in a tube furnace and heat-treated at 950 °C for 1 hour to obtain black particles. These particles were found to be 1 - 2 mm in diameter and not hollow. The results of thermogravimetric analysis indicated these particles as containing 50 % by weight of a silica component and 50 % by weight of a carbon component.

(TEST EXAMPLE 1)

The respective powders obtained in Examples 2 and 4 and Comparative Examples 1 and 2 were measured for powder resistance, carbon content (weight %) and specific surface area ($m^2$/g). The results are given in Table 1.

Table 1

|  | Particle Resistance ($\Omega \cdot$ cm) | Carbon Content (wt %) | Specific Surface Area ($m^2$/g) |
|---|---|---|---|
| Ex. 2 | 0.12 | 25 % | 175 |
| Ex. 4 | 0.22 | 18 % | 130 |
| Comp. Ex. 1 | >$10^{12}$ | - | 150 |
| Comp. Ex. 2 | 0.15 | 50 % | - |

(EXAMPLE 5)

60 g of the black powder obtained in Example 2 was added to 137.5 g of SBR (SBR-1712) manufactured by Japan Synthetic Rubber Co., Ltd. They were kneaded in a single screw kneader to prepare a rubber composition which was subsequently processed into a 3 mm thick sheet.

(COMPARATIVE EXAMPLE 3)

30 g of the powder obtained in Comparative Example 1 and 30 g of furnace black were mixed. Measurement of the mixed powder revealed an electrical conductivity of 0.20 ($\Omega$·cm). Analogous to Example 5, 60 g of this mixed powder was added to 137.5 g of SBR and the resulting mixture was kneaded and processed into a sheet.

(COMPARATIVE EXAMPLE 4)

Analogous to Example 5, 60 g of the black particles obtained in Comparative Example 2 was added to 137.5 g of SBR and the resulting mixture was kneaded and processed into a sheet.

(COMPARATIVE EXAMPLE 5)

Analogous to Example 5, 30 g of fine particle silica (average particle diameter 20 $\mu$m, primary particle diameter 80 nm) for rubber products and 30 g of furnace black were added to 137.5 g of SBR and the resulting mixture was kneaded and processed into a sheet.

(TEST EXAMPLE 2: Measurement of surface resistance of a resin composition sheet)

The respective sheets of Example 5 and Comparative Examples 3, 4 and 5 were measured for surface resistance. The measurement results, together with carbon contents of those sheets, are listed in Table 2.

Table 2

|  | Carbon Content of Sheet (wt %) | Surface Resistance ($\Omega$) |
|---|---|---|
| Ex. 5 | 7.6 % | $4.5 \times 10^7$ |
| Comp. Ex. 3 | 15.2 % | $>10^{12}$ |
| Comp. Ex. 4 | 15.2 % | $>10^{12}$ |
| Comp. Ex. 5 | 15.2 % | $>10^{12}$ |

(EXAMPLE 6)

20 g of the black powder obtained in Example 4 was added to 80 g of a nylon 6 resin (product name: AMIRAN, product of Toray Industries, Inc.) and the resulting mixture was kneaded and processed into a plate.

(COMPARATIVE EXAMPLE 6)

Analogous to Example 6, 10 g of fine particle silica and 10 g of furnace black were added to 80 g of a nylon 6 resin and the resulting mixture was kneaded and processed into a plate-form product.

(COMPARATIVE EXAMPLE 7)

Analogous to Example 6, 20 g of furnace black was added to 80 g of a nylon 6 resin and the resulting mixture was kneaded and processed into a plate-form product.

(TEST EXAMPLE 3: Measurement of resistivity of a polyamide product)

The respective polyamide products obtained in Example 6 and Comparative Examples 6 and 7 were measured for surface resistance. The measurement results, together with carbon contents of those products, are listed in Table 3.

Table 3

|  | Carbon Content of Product (wt %) | Surface Resistance ($\Omega$) |
|---|---|---|
| Ex.6 | 3.6 % | $4.0 \times 10^6$ |
| Comp. Ex. 6 | 10 % | $>10^{12}$ |
| Comp. Ex. 7 | 20 % | $>10^{12}$ |

(EXAMPLE 7)

10 g of the black powder obtained in Example 2 was added to 100 g of an acrylic resin (product name: ACROSE SUPER FS-CLEAR, product of Dai Nippon Toryo Co., Ltd.) and dispersed therein to provide a mixture. This mixture was coated on a PET film to a thickness of 50 $\mu$m and the dried.

(COMPARATIVE EXAMPLE 8)

Repeating of the procedure of Example 7 was attempted using the black particles of Comparative Example 2. This attempt however resulted in the failure to provide a coating film, due to excessive large particle diameters.

(TEST EXAMPLE 4)

The coating film obtained in Example 7 was measured for surface resistance. Measurement revealed a resistance value of $8 \times 10^4$ Ω.

**EFFECT OF THE INVENTION**

As described above, the carbon-coated porous silica powder of the present invention, when incorporated in a resin, rubber or coating composition, impart satisfactory electrical conductivity thereto.

**Claims**

1. A carbon-coated porous silica powder **characterized** as comprising porous silica wall structures having a hollow spherical or hollow sphere-derived shape and coated at their surfaces with carbon.

2. A carbon-coated porous silica powder as recited in claim 1, **characterized in that** said wall structures having a hollow spherical or hollow sphere-derived shape are crushed to the degree that they retain a continuous train of porous silica.

3. A carbon-coated porous silica powder obtainable by coating 3 nm - 3 mm diameter particles of an organic compound with a silica component and heating the coated' particles in a non-oxidizing atmosphere so that the organic compound is carbonized.

4. A powder comprising 3 nm - 3 mm diameter, silica-coated particles of an organic compound.

5. A process for production of a carbon-coated porous silica powder **characterized** as comprising heating the powder as recited in claim 4 at a temperature ranging from 500 °C to 1,400 °C in a non-oxidizing atmosphere.

6. A process for production of a carbon-coated porous silica powder **characterized** as comprising the steps of:

   coating 3 nm - 3 mm diameter particles of an organic compound with a silica component; and
   heating the coated particles at a temperature ranging from 500 °C to 1,400 °C in a non-oxidizing atmosphere to thereby carbonize the organic compound so that the silica component forms structures having a hollow spherical or hollow sphere-derived shape and the resulting carbon is deposited on surfaces of said structures formed by the silica component.

7. An electrically conductive resin composition containing a resin and the carbon-coated porous silica powder either recited in any one of claims 1 - 3 or produced according to the method recited in any one of claims 4 - 6.

FIG. 1

FIG. 2

FIG. 3

<table>
<tr><td align="center">**INTERNATIONAL SEARCH REPORT**</td><td>International application No.<br><br>PCT/JP01/00972</td></tr>
</table>

**A. CLASSIFICATION OF SUBJECT MATTER**
Int.Cl$^7$   C01B33/12, C01B31/02, C08K9/02, C08L101/00, H01B124, C09K3/16

According to International Patent Classification (IPC) or to both national classification and IPC

**B. FIELDS SEARCHED**

Minimum documentation searched (classification system followed by classification symbols)
Int.Cl$^7$   C01B33/12-33/193, C08K9/00

Documentation searched other than minimum documentation to the extent that such documents are included in the fields searched
Jitsuyo Shinan Koho        1926-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 6-142491, A (Japan Synthetic Rubber Co., Ltd.), 24 May, 1994 (24.05.94), Claims; Par. No. [0001]; working example (Family: none) | 1-7 |
| X | JP, 12-500113, A (Phodia Chimie), 11 January, 2000 (11.01.00), Claims 1, 18 & EP, 897414, A1 | 1,2,4,7 |
| A | EP, 984035, A (OTSUKA CHEMICAL COMPANY, LIMITED), 08 March, 2000 (08.03.00), Full text & JP, 10-316802, A, Full text | 1-7 |
| A | JP, 60-32854, A (Denki Kagaku Kogyo K. K.), 20 February, 1985 (20.02.85), Full text   (Family: none) | 1-7 |

☐ Further documents are listed in the continuation of Box C.   ☐ See patent family annex.

| | | |
|---|---|---|
| * | Special categories of cited documents: | |
| "A" | document defining the general state of the art which is not considered to be of particular relevance | |
| "E" | earlier document but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 April, 2001 (19.04.01) | 01 May, 2001 (01.05.01) |
| Name and mailing address of the ISA/<br>    Japanese Patent Office | Authorized officer |
| Facsimile No. | Telephone No. |

Form PCT/ISA/210 (second sheet) (July 1992)